# EUROPEAN PATENT APPLICATION

(11) **EP 4 810 456 A1**
(43) Date of publication of application: **23.09.2026**
(21) Application number: 24890345.2
(22) Date of filing: 25.09.2024
(51) Int. Cl.: C04B 35/50, C04B 35/495, G21C 7/24, G21C 7/10, G21F 1/06

(54) **NEUTRON ABSORPTION MATERIAL, USE THEREOF, AND CONTROL ROD FOR NUCLEAR REACTOR CORE**

(30) Priority: 16.11.2023 CN 202311528606
(71) Applicant: China Nuclear Power Technology Research Institute Co., Ltd., Shenzhen, Guangdong 518031 (CN); CGN Power Co., Ltd., Shenzen, Guangdong 518028 (CN)
(72) Inventor: QI, Jianan, Shenzhen, Guangdong 518031 (CN); HE, Mingtao, Shenzhen, Guangdong 518031 (CN); WANG, Xinxin, Shenzhen, Guangdong 518031 (CN); CHAI, Fanchao, Shenzhen, Guangdong 518031 (CN); MENG, Desheng, Shenzhen, Guangdong 518031 (CN); ZHAO, Changyou, Shenzhen, Guangdong 518031 (CN)
(74) Representative: Michalski Hüttermann & Partner mbB
(86) International application number: PCT/CN2024/121124
(87) International publication number: WO 2025/102987

(57) **Abstract**

The present application relates to a neutron absorption material, the use thereof, and a control rod for a nuclear reactor core. The neutron absorption material provided by the present application comprises ytterbium element and holmium element in a mass ratio of (0.7-0.95):1.

## Description

### RELATED APPLICATIONS

The present application claims priority to Chinese patent application No. 2023115286068, entitled "NEUTRON ABSORPTION MATERIAL, USE THEREOF, AND CONTROL ROD FOR NUCLEAR REACTOR CORE" filed on November 16, 2023, the content of which is hereby incorporated by reference in its entirety.

### TECHNICAL FIELD

The present application relates to the technical field of neutron absorption materials for nuclear reactors, and in particular to a neutron absorption material and use thereof, and a control rod for a nuclear reactor core.

### BACKGROUND

Nuclear power plants generally achieve control of the reactor power level and the average temperature of the primary circuit coolant by adjusting control rod positions or adjusting the boric acid concentration. Among them, although the chemical compensation method of changing the boric acid concentration to control reactivity is relatively smooth and uniform, adjusting boron to control reactivity is slow in speed, and a large amount of boroncontaining wastewater will be generated. Therefore, at present, insertion and withdrawal of control rods are mainly adopted to achieve rapid reactivity control of a reactor core.

The neutron absorption material in control rods is an important component for achieving nuclear reactor power level control and primary circuit coolant average temperature control. Neutron absorption materials need to be inserted into the core active zone for a long period of time, so as to control burnup-swing reactivity, xenon-induced reactivity, and temperature reactivity within the reactor. Therefore, neutron absorption materials are susceptible to irradiation by high neutron flux in the core active zone. Currently, the widely used neutron absorption material is Ag-In-Cd, but the reactivity worth of the Ag-In-Cd neutron absorption material decreases relatively quickly with burnup, and a sufficient service life of the neutron absorber under conditions in the core active section cannot be guaranteed.

### SUMMARY

The present application provides a neutron absorption material and use thereof, and a control rod for a nuclear reactor core. The neutron absorption material provided by the present application can ensure its neutron absorption characteristics under a high burnup depth, and maintain the reactivity worth, thereby prolonging the service life of the control rod for the nuclear reactor core.

A first aspect of the present application provides a neutron absorption material, including components including ytterbium element and holmium element in a mass ratio of 0.7:1 to 0.95:1.

A second aspect of the present application provides a control rod for a nuclear reactor core, including a cladding and a neutron absorption material filled in the cladding, wherein the neutron absorption material is the neutron absorption material according to any embodiment of the first aspect of the present application.

A third aspect of the present application provides use of the neutron absorption material according to any embodiment of the first aspect of the present application as a control rod for a high-temperature gas-cooled reactor or as a shielding ceramic material.

### BRIEF DESCRIPTION OF THE DRAWINGS

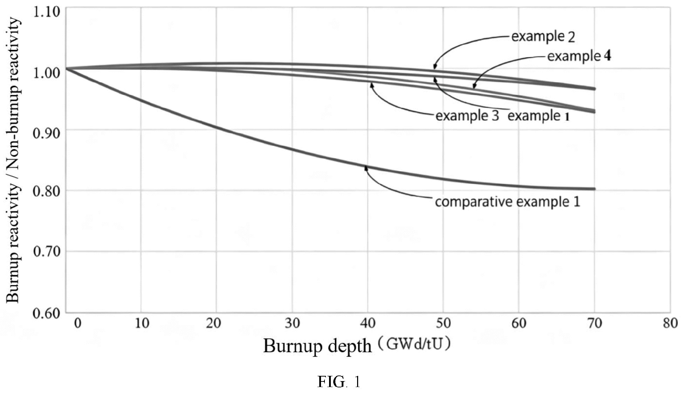

FIG. 1 is a curve graph showing neutron absorption characteristic of neutron absorption materials of Examples 1 to 4 and Comparative Example 1 of the present application under a condition of a burnup depth ranging from 0 GWd/tU to 70 GWd/tU.

### DETAILED DESCRIPTION

Hereinafter, the neutron absorption material and use thereof, and the control rod for the nuclear reactor core are further completely and clearly described with reference to specific embodiments. The present application may be implemented in many different forms, and is not limited to the embodiments described herein. On the contrary, the purpose of providing these embodiments is to make the understanding of the disclosure of the present application more thorough and comprehensive.

When a numerical range is disclosed herein, the above range is considered continuous, and includes the minimum value and the maximum value of the range, as well as every value between such minimum value and maximum value. Further, when the range refers to an integer, every integer between the minimum value and the maximum value of the range is included. In addition, when multiple ranges are provided to describe a feature or characteristic, the ranges can be combined. In other words, unless otherwise specified, all ranges disclosed herein should be understood to include any and all sub-ranges subsumed therein.

Unless otherwise defined, all technical and scientific terms used herein have the same meaning as commonly understood by those skilled in the art to which the present application belongs. The terms used herein in the specification of the present application are used only for the purpose of describing embodiments and are not intended to limit the present application. Unless otherwise stated or there is a contradiction, terms or phrases used herein have the following meanings:

In the present application, "a plurality of", "more", "multiple", "multivariate" or the like refer to a quantity greater than 2 or equal to 2, unless otherwise specified. For example, "one or more" means one, or equal to or more than two.

In the present application, the terms "first", "second", "third", "fourth", etc., in "first aspect", "second aspect", "third aspect", "fourth aspect", etc., are used for descriptive purposes only and are not to be construed as indicating or implying relative importance or quantity, or as implicitly specifying the importance or quantity of the technical features indicated. Moreover, "first", "second", "third", "fourth" and the like only serve the purpose of nonexhaustive enumeration, and it should be understood that they do not constitute a closed-ended limitation on quantity.

In the present application, the technical features described in an open-ended manner include both closed-ended technical solutions of the listed features, and open-ended technical solutions of the listed features.

In the present application, the "preferred", "preferably", "better", and "appropriate" are only used to describe an embodiment or example with better effect and should not be understood as constituting a limitation on the protection scope of the present application.

In the present application, the "further", "still further", "particularly", etc. are used for descriptive purposes, indicating differences in content, but should not be understood as a limitation on the protection scope of the present application.

In the present application, "optionally", and "optional" means either with or without, i.e., either of the two parallel solutions of "with" or "without". Unless otherwise specified, when multiple "optional" appear in a technical solution, each "optional" is independent of another, provided that there is no contradictions or mutual constraints.

In the present application, when referring to a numerical interval (i.e., a numerical range), unless otherwise specified, the distribution of optional numerical values within the numerical interval is deemed to be continuous and includes the two numerical endpoints of the numerical interval (i.e., the minimum value and the maximum value), as well as each numerical value between the two numerical endpoints. Unless otherwise specified, when a numerical range refers only to integers within the numerical range, it includes the two endpoint integers of the numerical range and every integer between the two endpoints, which is equivalent to directly listing every integer. For example, t is an integer selected from 1 to 10, meaning t is any integer selected from an integer group consisting of 1, 2, 3, 4, 5, 6, 7, 8, 9, and 10. In addition, when multiple ranges are provided to describe a feature or characteristic, these ranges can be combined. In other words, unless otherwise specified, the ranges disclosed herein should be understood to include any and all sub-ranges subsumed therein.

In the present application, the temperature parameters allow for both constant temperature treatment and variations within a certain temperature range, unless otherwise specified. It should be understood that the constant temperature treatment allows the temperature to fluctuate within the precision of the instrument control. Fluctuations in the range of ±5°C, ±4°C, ±3°C, ±2°C, and ±1°C are allowed.

In the present application, unless otherwise specified, the percentage concentration involved indicates a final concentration, which refers to the percentage of an added component in the system after the addition of the component.

In the present application, "neutron absorption characteristic" is a ratio of a reactivity worth of a neutron absorption material under a calculation considering a burnup of an absorber itself to a reactivity worth under a calculation not considering the burnup. This ratio can intuitively show the neutron absorption characteristic of a neutron absorber of a control rod. If the ratio is closer to 1, it indicates that during burnup, the reactivity worth of the control rod is closer to constant.

The control rod is made of a neutron absorption material. When the control rod is inserted into a fuel assembly for control and adjustment, the control rod can absorb a large number of neutrons to control the fission chain reaction of a nuclear reactor. However, as the insertion time of the neutron absorption material of the control rod in the fuel assembly increases, the neutron absorption material itself will also absorb neutrons and undergo burnup, and this burnup will cause the neutron absorption material to transform into a weak neutron absorption material, reducing the neutron absorption characteristic of the neutron absorption material.

Based on the above, in a first aspect of the present application, a neutron absorption material is provided, including ytterbium element and holmium element in a mass ratio of 0.7:1 to 0.95:1.

It can be understood that the mass ratio of ytterbium element to holmium element in the present application can be any numerical value between 0.7:1 to 0.95:1. Specifically, the mass ratio of ytterbium element to holmium element can be but is not limited to 0.7: 1, 0.71: 1, 0.72: 1, 0.73: 1, 0.75: 1, 0.78: 1, 0.8: 1, 0.81: 1, 0.82: 1, 0.83: 1, 0.85: 1, 0.88: 1, 0.89: 1, 0.9: 1, 0.91: 1, 0.92: 1, 0.93: 1, 0.94: 1, or 0.95: 1; or in a range defined by any two of the above point values as endpoints.

The neutron absorption material provided by the present application is prepared by combining ytterbium element and holmium element in a mass ratio of 0.7:1 to 0.95:1, which can effectively exhibit the characteristics of high neutron capture cross-section of ytterbium element and holmium element, thereby effectively absorbing thermal neutrons and ensuring good chemical and thermal stability, and consequently maintaining structural and performance stability over a long period of time in a high irradiation environment, so that the neutron absorption material is effectively prevented from transforming into a weak neutron absorption material after absorbing neutrons, thereby preventing the impact on the neutron absorption characteristics of the neutron absorption material.

Furthermore, the neutron absorption material provided by the present application can still ensure its neutron absorption characteristics under a high burnup depth, maintain the reactivity worth, thereby prolonging the service life of the neutron absorber.

In an example, the neutron absorption material includes a first component, a second component, and a third component, and a mass ratio of the first component, the second component, and the third component is (0.7 to 0.95):1:(0.4 to 4). The first component includes elemental ytterbium and/or ytterbium oxide. The second component includes elemental holmium and/or holmium oxide. The third component is selected from the group consisting of elemental molybdenum, molybdenum oxide, AlN, elemental yttrium, yttrium oxide, calcium oxide, and a combination thereof.

It can be understood that, in the present application, a mass ratio of elemental ytterbium and/or ytterbium oxide, elemental holmium and/or holmium oxide, and the third component can be any numerical value of (0.7 to 0.95):1:(0.4 to 4). Specifically, the ratio of elemental ytterbium and/or ytterbium oxide, elemental holmium and/or holmium oxide, and the third component can be but is not limited to 0.7: 1: 0.4, 0.71: 1: 0.8, 0.72: 1: 1, 0.76: 1: 1, 0.8: 1: 2, 0.85: 1: 2.5, 0.9: 1: 3, 0.9: 1: 3.5, or 0.95: 1: 4, or in a range defined by any two of the above point values as endpoints.

The elements and compounds in the third component have relatively weak neutron absorption ability compared to ytterbium element and holmium element, thereby avoiding affecting the stable absorption characteristics owing to the Yb/Ho ratio. Meanwhile, the addition of the third component can effectively adjust the mass proportion of ytterbium element in the neutron absorption material, so that the neutron absorption material has good radiation resistance, effectively reducing or inhibiting material damage and degradation caused by radiation, improving the reliability of the neutron absorption material under high radiation, and prolonging the service life of the control rod for the nuclear reactor.

In addition, regarding the elemental molybdenum, molybdenum oxide, AlN, elemental yttrium, and yttrium oxide encompassed by the third component, the molybdenum oxide can be but is not limited to MoO₂ and MoO₃; and the yttrium oxide can be but is not limited to Y₂O₃.

In an example, a mass percentage of the ytterbium element in the neutron absorption material is 7% to 15%. It can be understood that the mass percentage of the ytterbium element in the neutron absorption material can be any numerical value of the range from 7% and 15%. Specifically, the mass percentage of the ytterbium element in the neutron absorption material can be but is not limited to 7%, 8%, 10%, 12%, 14%, or 15%, or in a range defined by any two of the above point values as endpoints. By limiting the mass percentage of the ytterbium element in the neutron absorption material, the burnup depth of the neutron absorption material can be optimized, so that the neutron absorption material can still maintain a relatively high neutron absorption characteristic after use, thereby prolonging the service life of the neutron absorption material and improving its use efficiency.

Preferably, the mass ratio of the first component, the second component, and the third component is in a range of (0.7 to 0.95):1:(0.4 to 1). By further adjusting the mass ratio of the first component, the second component, and the third component, the neutron absorption material can be further prevented from transforming into a weak neutron absorption material after absorbing neutrons, thereby controlling the neutron absorption characteristics thereof, so that the neutron absorption characteristic under a high burnup depth is further improved, effectively maintaining the reactivity worth and prolonging the service life.

Preferably, the mass percentage of the ytterbium element in the neutron absorption material is 10% to 15%. By preferably selecting the mass percentage of ytterbium element within this range, the burnup depth of the neutron absorption material can be further optimized, that is, prolonging the service life of the neutron absorption material, thereby achieving higher burnup efficiency, and reducing decay loss of the neutron absorption material, so that the neutron absorption characteristic thereof is ≥97%, prolonging the reliable service time of the neutron absorber.

In an example, the ytterbium oxide includes Yb₂O₃. Ytterbium oxide has a relatively strong ability to resist ionizing radiation, and can withstand the radiation environment in a nuclear reactor while maintaining its performance and stability. In addition, it should be understood that the "ytterbium oxide" in the present application has a chemical formula of Yb₂O₃.

In an example, the holmium oxide includes Ho₂O₃. It should be understood that the "holmium oxide" in the present application has a chemical formula of Ho₂O₃.

More preferably, in the neutron absorption material of the present application, the neutron absorption material includes elemental ytterbium and/or ytterbium oxide, elemental holmium and/or holmium oxide, and a third component in a mass ratio of (0.7 to 0.95):1:(0.4 to 1). The mass percentage of the ytterbium element in the neutron absorption material is 10% to 15%. The neutron absorption material satisfying the above mass ratio and the above mass percentage can achieve adjustment of the functions and performances of the neutron absorption material, so that the neutron absorption characteristics of the neutron absorption material decrease slowly with the increase of burnup depth, and the neutron absorption characteristic of the neutron absorption material can be effectively ensured to be ≥97%, prolonging the reliable service time of the neutron absorber.

In an example, a mass percentage of the holmium element in the neutron absorption material is in a range from 7% to 21%. The mass percentage of the holmium element in the neutron absorption material can be but is not limited to 7%, 8%, 10%, 12%, 14%, 16%, 18%, 20%, or 21%, or in a range defined by any two of the above point values as endpoints.

In an example, under the condition of a burnup depth of 70 GWd/tU, the neutron absorption characteristic of the neutron absorption material is ≥90%.

A nuclear reactor, also called an atomic energy reactor or a reactor, is a device capable of maintaining a controlled self-sustaining chain nuclear fission reaction to achieve nuclear energy utilization. A nuclear reactor performs a self-sustaining chain nuclear fission process therein by appropriate arrangement of nuclear fuel without the need of supplementing a neutron source. Nuclear reactors include pressurized water reactors, boiling water reactors, heavy water reactors, and fast reactors, etc. Different reactors have control rods of different shapes and sizes. Among them, heavy water reactors use control rods in the form of thick rods or a sleeve form, boiling water reactors use cross-shaped control rods, pressurized water reactors use rod-cluster control rods which typically contain 24 thin control rods.

Based on the above, in a second aspect of the present application, a control rod for a nuclear reactor core is provided, including a cladding and a neutron absorption material filled in the cladding, wherein the neutron absorption material is the neutron absorption material according to any one of the examples of the second aspect of the present application. It can be understood that the present application is primarily concerned with the composition of the control rod for the nuclear reactor core, and does not limit the specific shape of the control rod for the nuclear reactor core.

The control rod for the nuclear reactor core provided by the present application can ensure its neutron absorption characteristics under a high burnup depth, and maintain the reactivity worth, thereby prolonging the service life of the neutron absorber. In addition, it can be understood that the control rod for the nuclear reactor core in the present application has all the advantages of the neutron absorption material according to any one of the examples of the first aspect of the present application, which will not be repeated herein. The control rod for the nuclear reactor core in the present application is made of the neutron absorption material according to any one of the examples in the first aspect. There is a set of mechanical devices outside the nuclear reactor pressure vessel to manipulate the control rod. When the control rod is fully inserted into the center of the reactor, it can absorb a large number of neutrons to weaken the fission chain reaction. If the control rod is pulled out a little, the speed of the chain reaction gradually reaches a certain stable value. If it is desired to increase the energy released by the reactor, the control rod only needs to be pulled out a little further, so that fewer neutrons are absorbed and more neutrons participate in the fission reaction. If the control rod is fully inserted into the center of the nuclear reactor to absorb most of the neutrons, the chain reaction can be stopped. Furthermore, the control rod for the nuclear reactor core provided by the present application can be effectively prevented from transforming into a weak neutron absorption material after absorbing neutrons, and thus the neutron characteristics of the control rod can be controlled, so that the control rod can still ensure its neutron absorption characteristics under a high burnup depth and maintain the reactivity worth, thereby prolonging the service life of the neutron absorber.

The following provides specific examples for further description of the present application, but the present application is not limited to the following examples. Unless otherwise specifically stated, the raw materials used in the examples are all commercially available products.

### Example 1

Example 1 of the present application provides a neutron absorption material, including Yb₂O₃, Ho₂O₃, and MoO₃. Calculated by weight parts, Yb₂O₃ is 9.44 parts, Ho₂O₃ is 10 parts, and MoO₃ is 8.2 parts. The mass ratio of Yb₂O₃ to Ho₂O₃ is 0.944: 1. The mass ratio of ytterbium element to holmium element is 0.95: 1. In the neutron absorption material of Example 1, the mass percentage of Yb₂O₃ is 34.2%, and the mass percentage of ytterbium element is 15%.

### Example 2

Example 2 of the present application provides a neutron absorption material, including Yb₂O₃, Ho₂O₃, and MoO₃. Calculated by weight parts, Yb₂O₃ is 7.36 parts, Ho₂O₃ is 10 parts, and MoO₃ is 4.18 parts. The mass ratio of Yb₂O₃ to Ho₂O₃ is 0.736: 1. The mass ratio of ytterbium element to holmium element is 0.74: 1. In the neutron absorption material of Example 2, the mass percentage of Yb₂O₃ is 34.2%, and the mass percentage of ytterbium element is 15%.

### Example 3

Example 3 of the present application provides a neutron absorption material, including Yb₂O₃, Ho₂O₃, and MoO₃. Calculated by weight parts, Yb₂O₃ is 9.44 parts, Ho₂O₃ is 10 parts, and MoO₃ is 39.8 parts. The mass ratio of Yb₂O₃ to Ho₂O₃ is 0.944: 1. The mass ratio of ytterbium element to holmium element is 0.95: 1. In the neutron absorption material of Example 3, the mass percentage of Yb₂O₃ is 16%, and the mass percentage of ytterbium element is 7%.

### Example 4

Example 4 of the present application provides a neutron absorption material, including Yb₂O₃, Ho₂O₃, and MoO₃. Calculated by weight parts, Yb₂O₃ is 7.36 parts, Ho₂O₃ is 10 parts, and MoO₃ is 28.8 parts. The mass ratio of Yb₂O₃ to Ho₂O₃ is 0.736: 1. The mass ratio of ytterbium element to holmium element is 0.74: 1. In the neutron absorption material of Example 4, the mass percentage of Yb₂O₃ is 16%, and the mass percentage of ytterbium element is 7%.

### Comparative Example 1

Comparative Example 1 of the present application provides a neutron absorption material, including metallic Ag, metallic In, and metallic Cd. The mass ratio of metallic Ag, metallic In, and metallic Cd is 80: 15: 5.

The mass ratios of respective components in Examples 1 to 4 and Comparative Example 1 are shown in Table 1.

**Table 1**

| Example | Mass ratio of Yb₂O₃ to Ho₂O₃ | Mass ratio of ytterbium element to holmium element | Mass percentage of Yb₂O₃ | Mass percentage of ytterbium element in neutron absorption material |
|---|---|---|---|---|
| Example 1 | 0.944: 1 | 0.95: 1 | 34.2% | 15% |
| Example 2 | 0.736: 1 | 0.74: 1 | 34.2% | 15% |
| Example 3 | 0.944: 1 | 0.95: 1 | 16% | 7% |
| Example 4 | 0.736: 1 | 0.74: 1 | 16% | 7% |
| Comparative Example | Mass ratio of metallic Ag, metallic In, and metallic Cd | | | |
| Comparative Example 1 | 80: 15: 5 | | | |

Test method: The neutron absorption materials of Examples 1 to 4 and Comparative Example 1 were modeled using a Monte Carlo program according to the mass ratios. The burnup calculation can be performed using the Chebyshev Rational Approximation Method, as shown in the paper entitled "Calculation and Analysis of Grey Control Rod Worth Depletion With Reactor Monte Carlo Code, Modern Applied Physics, 2020, 11(01)".

The test results of neutron absorption characteristics of the neutron absorption materials in Examples 1 to 4 and Comparative Example 1 under a burnup depth of 0 GWd/tU to 70 GWd/tU are shown in FIG. 1. In FIG. 1, y-axis represents a ratio of the reactivity worth of the control rod absorption material calculated considering burnup to the reactivity worth calculated without considering burnup. This ratio can intuitively demonstrate the neutron absorption characteristics of the control rod neutron absorber. If the ratio is closer to 1, it indicates that during burnup, the reactivity worth of the control rod control rod is closer to constant. For the Ag-In-Cd neutron absorber in Comparative Example 1, under a burnup depth of 70 GWd/tU, the neutron absorption characteristic of the neutron absorption material is 85%, indicating that its reactivity worth is 85% of the original value. In contrast, under a burnup depth of 70 GWd/tU, the neutron absorption materials provided in Examples 1 to 4 of the present application exhibit neutron absorption characteristics of ≥95%, indicating that their neutron absorption characteristics remain substantially unchanged, that is, the reactivity worth remains substantially unchanged. Therefore, the service life of the control rod neutron absorber can be prolonged.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present application.

The above-described embodiments are only several implementations of the present application for facilitating specific and detailed understanding of the technical solutions of the present application, but they should not be construed as limiting the scope of the present application. It should be understood by those of ordinary skill in the art that various modifications and improvements can be made without departing from the concept of the present application, and all fall within the protection scope of the present application. It should be understood that technical solutions obtained by those skilled in the art through logical analysis, reasoning, or limited testing on the basis of the technical solutions provided by the present application are all within the protection scope of the claims of the present application. Therefore, the patent protection of the present application shall be defined by the appended claims, and the description can be used to interpret the contents of the claims.

## Claims

1. A neutron absorption material, comprising components including ytterbium element and holmium element in a mass ratio of about 0.7:1 to 0.95:1.

2. The neutron absorption material according to claim 1, comprising a first component, a second component, and a third component;
a mass ratio of the first component, the second component, and the third component is in a range of about (0.7 to 0.95):1:(0.4 to 4);
wherein the first component comprises one or more of elemental ytterbium and ytterbium oxide; and
the second component comprises one or more of elemental holmium and holmium oxide.

3. The neutron absorption material according to claim 2, wherein the third component is selected from the group consisting of elemental molybdenum, molybdenum oxide, AlN, elemental yttrium, yttrium oxide, calcium oxide, and a combination thereof.

4. The neutron absorption material according to claim 3, wherein the molybdenum oxide comprises one or more of MoO₂ and MoO₃.

5. The neutron absorption material according to claim 3, wherein the yttrium oxide comprises Y₂O₃.

6. The neutron absorption material according to any one of claims 1 to 5, wherein a mass percentage of the ytterbium element in the neutron absorption material is in a range of about 7% to 15%.

7. The neutron absorption material according to any one of claims 2 to 6, wherein a mass ratio of the first component, the second component, and the third component is in a range of about (0.7 to 0.95):1:(0.4 to 1).

8. The neutron absorption material according to any one of claims 1 to 7, wherein a mass percentage of the ytterbium element in the neutron absorption material is in a range of about 10% to 15%.

9. The neutron absorption material according to any one of claims 2 to 8, wherein the ytterbium oxide comprises Yb₂O₃.

10. The neutron absorption material according to any one of claims 2 to 9, wherein the holmium oxide comprises Ho₂O₃.

11. The neutron absorption material according to any one of claims 1 to 10, wherein a mass percentage of the holmium element in the neutron absorption material is in a range of about 7% to 21%.

12. The neutron absorption material according to any one of claims 1 to 11, wherein under a condition of a burnup depth of 70 GWd/tU, a neutron absorption characteristic of the neutron absorption material is about ≥ 90%.

13. The neutron absorption material according to any one of claims 1 to 12, wherein the neutron absorption material comprises Yb₂O₃, Ho₂O₃, and MoO₃;
wherein calculated by weight parts, Yb₂O₃ is about 7.36 parts, Ho₂O₃ is about 10 parts, and MoO₃ is about 4.18 parts;
a mass ratio of Yb₂O₃ to Ho₂O₃ is about 0.736:1, and a mass ratio of the ytterbium element to the holmium element is about 0.74:1;
a mass percentage of Yb₂O₃ in the neutron absorption material is about 34.2%, and a mass percentage of the ytterbium element in the neutron absorption material is about 15%.

14. A control rod for a nuclear reactor core, comprising:
a cladding; and
a neutron absorption material filled in the cladding, wherein the neutron absorption material is the neutron absorption material according to any one of claims 1 to 13.

15. A shielding ceramic material, comprising the neutron absorption material according to any one of claims 1 to 13.
